# EUROPEAN PATENT SPECIFICATION

(11) **EP 3 416 399 B1**
(45) Date of publication and mention of the grant of the patent: **16.02.2022**
(21) Application number: 18177877.0
(22) Date of filing: 14.06.2018
(51) Int. Cl.: H04N 21/4728, H04N 21/6437

(54) **METHODS, DEVICES, AND COMPUTER PROGRAMS FOR IMPROVING STREAMING OF PORTIONS OF MEDIA DATA**
VERFAHREN, VORRICHTUNGEN UND COMPUTERPROGRAMME ZUR VERBESSERUNG DES STREAMINGS VON TEILEN VON MEDIENDATEN
PROCÉDÉS, DISPOSITIFS ET PROGRAMMES INFORMATIQUES PERMETTANT D'AMÉLIORER LA TRANSMISSION EN CONTINU DE PARTIES DE DONNÉES MULTIMÉDIA

(30) Priority: 16.06.2017 GB 201709619
(43) Date of publication of application: 19.12.2018
(73) Proprietor: CANON KABUSHIKI KAISHA, Ohta-ku Tokyo 146-8501 (JP)
(72) Inventor: MAZE, Frédéric, 35850 LANGAN (FR); OUEDRAOGO, Naël, 35330 MAURE DE BRETAGNE (FR); NASSOR, Eric, 35235 THORIGNE-FOUILLARD (FR); DENOUAL, Franck, 35190 SAINT DOMINEUC (FR)
(74) Representative: Santarelli

(56) References cited:
- WO-A1-2017/029400
- US-A1- 2015 201 197
- US-A1- 2017 118 540
- HANDLEY UCL V JACOBSON PACKET DESIGN C PERKINS UNIVERSITY OF GLASGOW M: "SDP: Session Description Protocol; rfc4566.txt", SDP: SESSION DESCRIPTION PROTOCOL; RFC4566.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 July 2006 (2006-07-01), XP015055003,
- CAMARILLO ERICSSON H SCHULZRINNE COLUMBIA UNIVERSITY G: "The Session Description Protocol (SDP) Grouping Framework; rfc5888.txt", THE SESSION DESCRIPTION PROTOCOL (SDP) GROUPING FRAMEWORK; RFC5888.TXT, INTERNET ENGINEERING TASK FORCE, IETF; STANDARD, INTERNET SOCIETY (ISOC) 4, RUE DES FALAISES CH- 1205 GENEVA, SWITZERLAND, 12 June 2010 (2010-06-12), pages 1-21, XP015070840, [retrieved on 2010-06-12]

## Description

### FIELD OF THE INVENTION

The invention generally relates to the field of media data streaming over communication networks, for example communication networks using Real-Time Protocol (RTP). The invention concerns methods, devices, and computer programs for improving streaming of portions of media data using RTP or similar protocols, making it possible for user devices to choose which portions of media data to receive.

### BACKGROUND OF THE INVENTION

A media data may be transmitted over communication networks using different transmission protocols. For instance, the User Datagram Protocol (UDP) uses a simple transmission model with a few amounts of additional data for control purposes, making it possible to transmit media data efficiently in terms of speed. This is because UDP does not require prior communications ("handshaking dialogues") to set up special transmission channels or data paths prior to transmitting media data as data packets. However, UDP does not ensure that data packets are well received, that they are received in a correct order, and only once each (i.e. that there is no duplicate). Indeed, data packets are transmitted individually and are checked for integrity only if they arrive.

To cope with such constraints, the Real-time Transport Protocol (RTP), as defined in RFC 3550 specification, has been developed. It is based on UDP and is suited for transmitting real-time media data such as video, audio, or any timed data between a server and a client device, over multicast or unicast network services in a communication network. According to RTP, payload data are provided with an additional header including an identifier of the data source, denoted SSRC, a timestamp for synchronization, sequence numbers for managing packet loss and reordering, and a payload type specifying the type of the transported media data (audio/video) and their format (codec).

In order to control the transmission of data packets forming a media stream, RTP uses a specific protocol known as Real Time Control Protocol (RTCP). According to this protocol, control packets are periodically transmitted for making it possible to monitor the quality of service and transmission conditions, to convey information about the participants in an on-going session, and optionally to correct transmission errors. For the sake of illustration, Receiver Report (RR) and Sender Report (SR) are RTCP messages that are useful for estimating the quality of service and network conditions of a network path, also called transmission conditions, and Negative Acknowledgment (NACK) are RTCP messages that may be used for requesting the retransmission of non-received packets.

It is to be noted that in order to provide a usable service, an additional control protocol such as the Session Initiation Protocol (SIP), as defined in RFC 3261, or the Real Time Streaming Protocol (RTSP), as defined in RFC 2326 (recently replaced by RFC 7826), may be used in addition to RTP and RTCP protocols to negotiate, describe, and control multimedia sessions between a server and a client device. These protocols rely on the Session Description Protocol (SDP), as defined in RFC 4566, for describing multimedia sessions for the purposes of session announcement, session invitation, and other forms of multimedia session initiation.

The SDP provides a standard representation (that may be considered as a manifest) to declare available media streams that can be sent by a content provider to the session participants. It may further comprise media details (e.g. type of media data, format and related parameters of the media data carried in the media streams), transport protocol and addresses, and other session description metadata.

Upon receiving and parsing an SDP representation, a client device is then usually able to select and to set up one or more RTP sessions to stream one or more of the offered media streams.

Such a feature may be used, in particular, for selecting a particular format of media data encoded according to different formats, and/or for selecting a particular portion of high resolution media data.

Indeed, since video content is provided with increasing resolution (4K, 8K, and beyond) and since there is an increasing heterogeneity of display devices (from smartphones to UHD displays), transmitting the full high-resolution video appears to be meaningless or sub-optimal in terms of bandwidth consumption in view of device rendering capabilities or appears to be impossible (e.g. insufficient network bandwidth), in many cases.

Accordingly, a full high-resolution video or a panorama video may be split into spatial sub-parts, each spatial sub-part being encoded either as an independent video bitstream (e.g. to obtain multiple independent H264 or HEVC video bitstreams) or as a single bitstream containing tiled video sub-bitstreams (e.g. tiled HEVC or HEVC tiles) where coding dependencies can be constrained inside tile boundaries. For the sake of illustration, a spatial sub-part may correspond to a region of interest (ROI) in a video. It can also be called a tile region or simply a tile.

In this context of video splitting, signaling spatially-related media streams in an SDP representation or a manifest is needed in order to make it possible for RTP client devices to select appropriate media streams (i.e. a full-resolution stream or spatial sub-part streams) according to their specific needs.

US 2015/0201197 discloses a solution for streaming multiple video sub-parts with virtual stream identifiers. According to this solution, a video frame is divided into multiple "virtual" video frames corresponding to particular spatial areas of the video frame. Each resulting virtual video bitstream is encoded independently as an independent bitstream. A virtual stream identifier is associated with each virtual video bitstream. Next, all virtual video bitstreams to be transmitted are multiplexed in a single media stream that is transmitted (typically as one RTP session). A virtual frame header (typically an RTP extension header) comprising a virtual stream identifier denoted "vstream id" is used to separate and retrieve the virtual video bitstreams within the transmitted single media stream. A description of the single media stream (typically an SDP representation or a manifest) is communicated from the video source device to the client device. The received description describes the plurality of individual virtual video bitstreams the video source device is configured to provide within a single media stream. The description of each virtual bitstream may include an identifier of the virtual bitstream, "vstream id", as well as encoding information of the virtual video bitstream and indication of the area of the source video that is encoded by the virtual video bitstream (e.g. coordinates x, y and dimensions w, h).

While such a solution makes it possible to send multiple sub-bitstreams within a single RTP session, it presents drawbacks. In particular, it is based on a proprietary method (using a proprietary RTP extension header and SDP description) that is not compatible with multicast delivery and requires more extra bytes per RTP packets.

Documents US2017/118540 A1 and WO2017/029400 A1 describe signalling video tiles in a DASH manifest which indicates a spatial relationship using an "srd" attribute.

Therefore, there is a need to improve streaming of portions of media data using RTP or similar protocols, making it possible for a user device to choose which portions of media data to receive.

### SUMMARY OF THE INVENTION

The present invention has been devised to address one or more of the foregoing concerns.

In this context, there is provided a solution for improving streaming of portions of media data using RTP or similar protocols, making it possible for a user device to choose which portions of media data to receive.

According to a first aspect of the invention, there is provided a method for transmitting at least two media streams, each of the at least two media streams carrying encoded media data, the encoded media data respectively carried by the at least two media streams being decodable independently from each other, in accordance with claim 1.

Therefore, the method of the invention makes it possible to signal regions of interest in an SDP representation or a manifest, in generic manner (i.e. compatible with existing RTP (or similar) signaling and transport mechanisms), allowing selection of one or more ROIs, each independently decodable ROI corresponding to either:
- spatially-related and independently decodable video data carried in independent media streams (used for multi-view applications for example), or
- media streams carrying independently decodable spatial subparts (e.g. HEVC tiles) of a tiled video bitstream, and possibly depending on an additional media stream carrying common data to all tiled video bitstreams.

Moreover, the method of the invention makes it possible to deliver independently decodable full video data carried in independent media streams and, as well, to deliver media streams representing only subparts (e.g. tiles) of a complete full video. It supports both unicast and multicast delivery modes and does not require the use of extra bytes (i.e. an additional RTP (or similar) header extension) per RTP packet in Session or SSRC multiplexing modes.

Optional features of the invention are further defined in the dependent appended claims.

According to a second aspect of the invention, there is provided a method for receiving at least two media streams, each of the at least two media streams carrying encoded media data, the encoded media data respectively carried by the at least two media streams being decodable independently from each other, in accordance with claim 5.

According to a third aspect of the invention, there is provided a device for transmitting at least two media streams, each of the at least two media streams carrying encoded media data, the encoded media data respectively carried by the at least two media streams being decodable independently from each other, in accordance with claim 8.

According to a fourth aspect of the invention, there is provided a device for receiving at least two media streams, each of the at least two media streams carrying encoded media data, the encoded media data respectively carried by the at least two media streams being decodable independently from each other, in accordance with claim 9.

The second, third, and fourth aspects of the present invention have optional features and advantages similar to the first above-mentioned aspect.

Since the present invention can be implemented in software, the present invention can be embodied as computer readable code for provision to a programmable apparatus on any suitable carrier medium, and in particular a suitable tangible carrier medium or suitable transient carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Further advantages of the present invention will become apparent to those skilled in the art upon examination of the drawings and detailed description. It is intended that any additional advantages be incorporated herein.

### BRIEF DESCRIPTION OF THE DRAWINGS

Embodiments of the invention will now be described, by way of example only, and with reference to the following drawings in which:
**Figure 1a** illustrates schematically an example of a system for streaming media data from a server to a client device according to embodiments of the invention;
**Figure 1b** illustrates steps for streaming media data from a server to a client device according to embodiments of the invention;
**Figure 2a** illustrates an example of a panorama video comprising spatial sub-parts that may be described in an SDP description or a manifest and transmitted as two independent media streams;
**Figure 2b** illustrates an example of a 360° panorama video and of a spatial sub-part of this panorama video; and
**Figure 3** represents a block diagram of a server or of a client device in which steps of one or more embodiments may be implemented.

### DETAILED DESCRIPTION OF EMBODIMENTS OF THE INVENTION

Embodiments of the invention rely on existing RTP signaling mechanisms to be compatible with most of existing manners of organizing RTP streaming of multiple related video streams (SSRC-multiplexing, RTP session multiplexing or Bundle delivery method).

According to embodiments, a new "group" semantic (e.g. denoted SRD for Spatial Relationship Description) is defined to indicate that media streams (tiles and full-resolution) that are part of this group are compatible, for example that media data carried in these media streams are spatially related. Such compatibility means, for example, that the media streams belonging to the same group represent the same or part of the same media source and may be rendered or displayed simultaneously. In such a case, a group identifier may be considered as a spatial frame identifier.

Moreover, a new attribute, for example denoted "srd", is defined in order to characterize spatial relationship between media data carried in media streams that pertain to the same group. Such a new attribute may comprise spatial coordinates that may be expressed in absolute coordinates or as normalized coordinates or may comprise information for identifying the media stream carrying the full-resolution media data (either with an explicit parameter or deduced from other existing attributes/parameters).

In addition to defining a new group semantic, the "group" attribute may be extended with an additional parameter for identifying a group (i.e. a group identifier) making it possible to reference this group in another group or attribute in the Session Description Protocol (SDP) description (or manifest). This makes the group of media streams an object by itself in the SDP description that can be referenced as a single item and to which own attributes can be associated.

The "group" attribute may comprise additional parameters to describe the grid of tiles (e.g. number of columns and rows, or the size of the reference frame). This provides the spatial organization of the media data carried in media streams in a single SDP description line.

A new attribute containing additional parameters associated with a group may be defined, the new attribute and the group being associated with each other using the new proposed group identifier, to allow a unique declaration of attributes, at a group level, these attributes being common to the group of media streams (rather than repeating them for each media stream).

According to particular embodiments, a group may be defined with the new group semantic (e.g. SRD) limited to signaling the media streams that compose the corresponding full video (i.e. a set of spatial sub-parts only), another group being defined with another new group semantic containing the full video as an alternative to the first group.

In addition to defining a new group semantic to signal the spatial dependency between media data carried in media streams, a new semantic of the attribute "depend" may be defined to characterize coding dependency between tiles in tiled video(s).

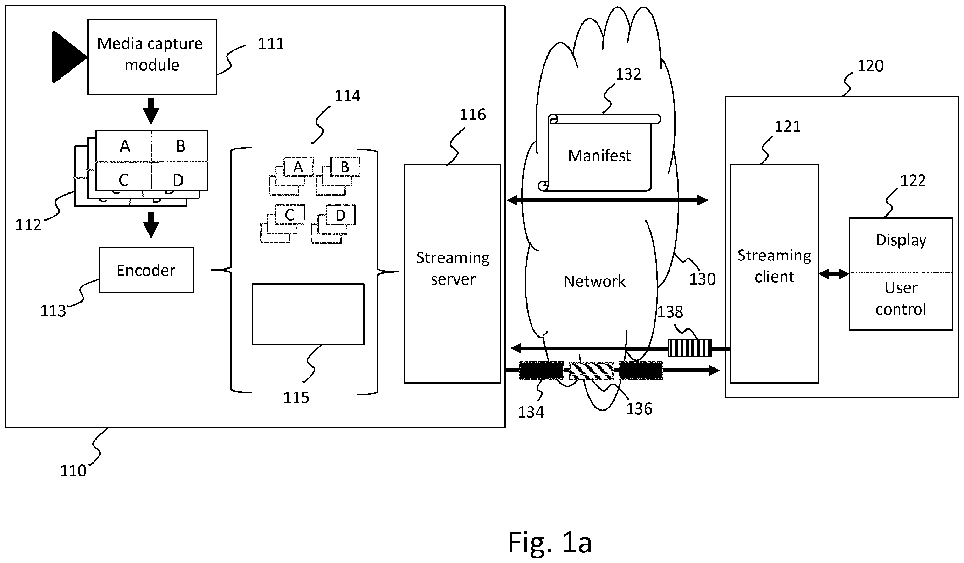

**Figure 1a** illustrates schematically an example of a system for streaming media data from a server to a client device according to embodiments of the invention. As illustrated, server 110 may transmit one or several media streams to client device 120 through network 130.

For the sake of illustration, server 110 comprises media capture module 111, media encoder 113, and streaming server 116. Client device 120 comprises streaming client 121, media decoder (not represented), and display and user control interfaces 122.

Media capture module 111 is used to capture media data such as high-resolution video 112 (e.g. 8k4k or higher). This video may represent a 2D panorama or a 360-degree panorama. This high-resolution video may also be obtained by stitching lower-resolution videos from multiple media capture interfaces (e.g. from several video cameras).

According to embodiments, this high-resolution video is divided into several spatial sub-parts or tiles (four spatial sub-parts in the example illustrated in Figure 1a, denoted A, B, C, and D) that are encoded by one or several media encoders 113 into multiple independent encoded media data referenced 114, for example independent H.264 or HEVC media data. In addition, video data 115 representing the full panorama, possibly at lower resolution, can be generated.

It is to be noted that in case the encoding format itself supports the description of spatial tiles (like HEVC coding format), encoded media data 114 may represent sub-bitstreams of the overall HEVC bitstream, each sub-bitstream corresponding to an HEVC tile. In order to obtain independent HEVC tile sub-bitstreams, encoding of HEVC tiles is motion-constrained within each tile (i.e. a given tile does not use prediction data outside the co-located tile in reference pictures).

It is also to be noted that in the case in which the high-resolution video corresponds to the stitching of multiple videos, the latter can be directly encoded as independent media data without performing the steps of stitching the multiple videos and dividing high-resolution video into several media data.

After they have been obtained, the spatial sub-parts or tiles may be encoded by encoder 113 with different resolutions and bitrates and proposed to the client device within an SDP description (or manifest) to make it possible to adapt the server sending rate to the available network bandwidth. As an alternative, for example in case of live streaming, server 110 may dynamically adapt the encoding rate depending on the available network bandwidth, for example based on feedback messages 138 transmitted by client device 120.

According to embodiments, media streams that are requested by client device 120 are streamed from streaming server 116 of server 110 to streaming client 121 of client device 120 by using the real-time protocol (RTP), it being observed that at the client device end, the streaming process is generally operated by means that are different from the display and user related process.

Accordingly, at the server end, a video is obtained, then split into sub-parts that are encoded as media data which are packetized, and then transmitted as media streams (corresponding to sets of RTP packets) over a communication network.

Symmetrically, at the client device end, RTP packets are received and then depacketized before being decoded as video spatial sub-parts that may be rendered on a display.

As illustrated with reference 132, an SDP description or a manifest, typically a file, is used to describe media streams made available by streaming server 116. Such an SDP description or a manifest is usually exchanged between a server and a client device by using a control protocol such as the Session Initiation Protocol (SIP), as defined in RFC 3261, or the Real Time Streaming Protocol (RTSP), as defined in RFC 2326 or in RFC 7826. Such an SDP representation or a manifest may also be exchanged by using any other convenient means between the server and the client device (e.g. HTTP protocol or email), before any media data streaming. It provides connection information, a list of available media streams with their characteristics, a time of availability of the content described by this SDP description or manifest, and other session description metadata to the client device.

Turning back to Figure 1a, upon reception of SDP description or manifest 132, streaming client 121 can determine one or more media streams to be received and set up one or more RTP session connections to receive the determined one or more media streams (represented by RTP packets 134 and 136) to be rendered simultaneously.

The choice of media streams to be received is made according to information provided by the SDP representation or manifest, depending on guidance provided by client device 120 or by a user via user control module 122. For the sake of illustration, streaming client 121 may only get media streams corresponding to the Region-of-interest the user is looking at.

According to embodiments of the invention, a client device can dynamically select and change the choice and number of media streams that are currently transmitted by a server according to its needs. For example, if a user only looks at a sub-part of a full panorama, only media streams needed for covering this sub-part and possibly neighboring sub-parts (to anticipate future user's viewpoint movement within the panorama) are actually requested by the client device and streamed by streaming server 116. Streaming client 121 may use messages from the control protocol used to exchange the SDP description or manifest to stop and set up new RTP session connections or messages from the Real-time Control Protocol (RTCP) to change the selected media streams.

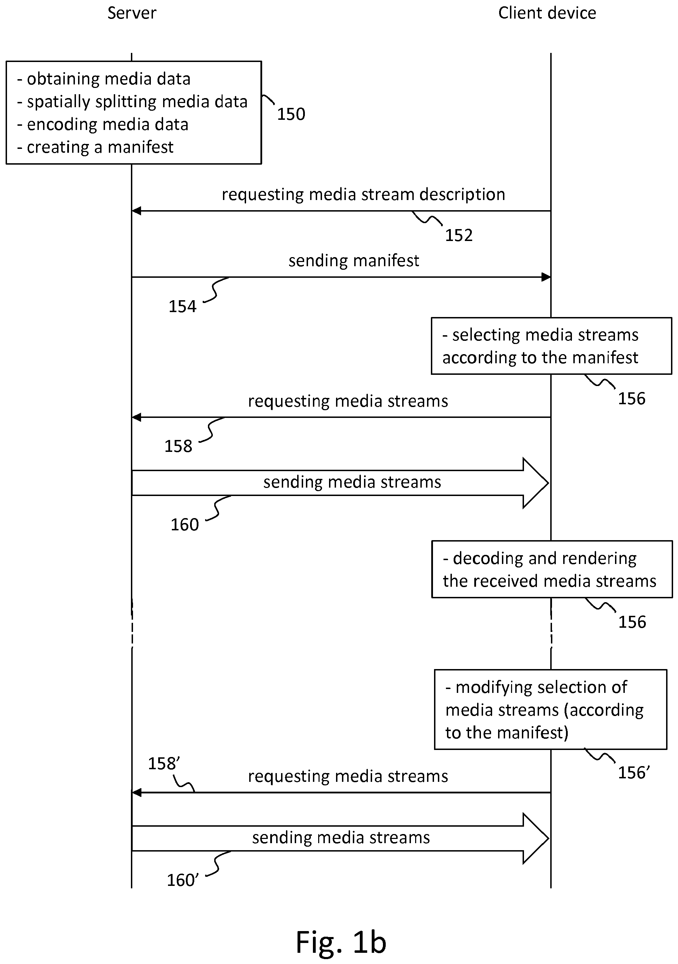

**Figure 1b** illustrates steps for streaming media data from a server to a client device according to embodiments of the invention.

As illustrated, a first step (step 150) is directed to obtaining media data, splitting the media data spatially to create spatial sub-parts, encoding the sub-parts as encoded media data, and creating a description or manifest of the media streams that will carry the encoded media data. This step is carried out by the server.

Upon receiving a request for a description of media streams from the client device (step 152), the server sends the manifest (step 154) so that the client device may select media streams to be received (step 156). This selection is based on the received manifest. Then the client device requests to the server the selected media streams (step 158), for example the client device requests the setup of a RTP session for each selected media stream.

Upon reception of the request, the server sends the requested media streams to the client device (step 160) so that the latter may decode the media data and render them on a display (step 162) or store them for a later use.

As illustrated with references 156' to 160', the selection of media streams to be transmitted may vary over time.

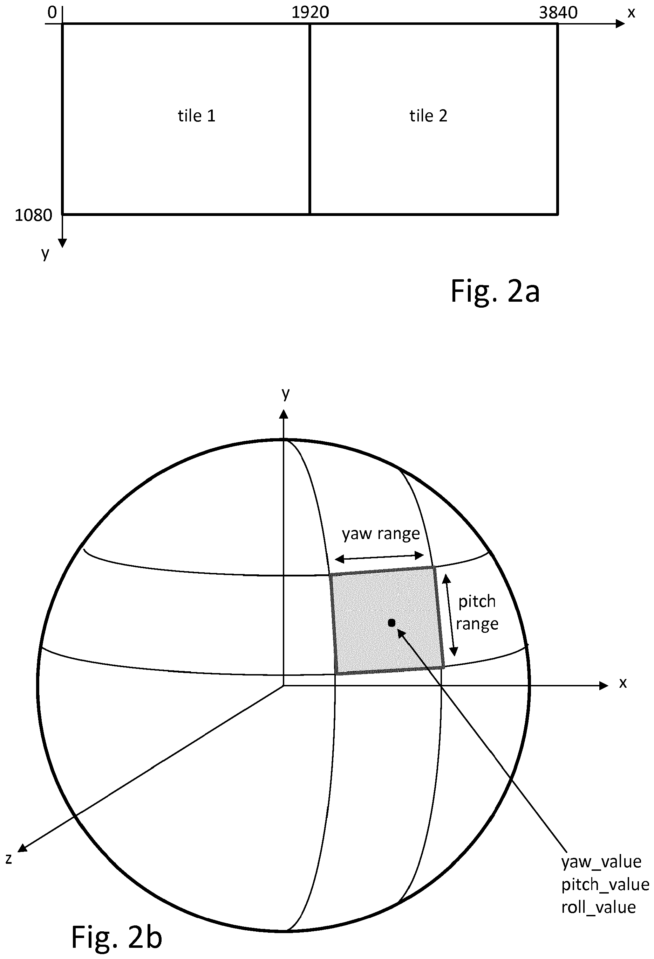

**Figure 2a** illustrates an example of a panorama video comprising spatial sub-parts that may be described in an SDP description or a manifest and transmitted as two independent media streams.

As illustrated, the panorama video comprises frames having a size of 3840 pixels width and 1080 pixels height. They are divided into two spatial sub-parts or tiles, denoted tile 1 and tile 2, having a size of 1920 pixels width and 1080 pixels height.

According to the illustrated example, the coordinates of the spatial sub-parts may be expressed in the reference frame represented by axes x and y and origin 0.

**Figure 2b** illustrates an example of a 360° panorama video and of a spatial sub-part of this panorama video. As illustrated, the spatial sub-part is defined with a point having (*yaw_value*, *pitch_value*, *roll_value*) as coordinates and with a yaw range and a pitch range.

Again, this 360° panorama video and/or spatial sub-parts such as the illustrated spatial sub-part may be described in an SDP description or in a manifest.

Tables 1 to 6 of the Appendix give examples of SDP descriptions according to embodiments of the invention. For the sake of illustration, these SDP descriptions are directed to three media descriptions.

The syntax used in these examples is based upon RFC 4566 wherein it is stated that an SDP session description consists of a number of lines of text of the form <type>=<value>.

More precisely, as stated in RFC 4566, an SDP session description consists of a session-level section followed by zero or more media-level sections. The session-level part starts with a "v=" line and continues to the first media-level section. Each media-level section starts with an "m=" line and continues to the next media-level section or end of the whole session description. In general, session-level values are the default for all media unless overridden by an equivalent media-level value.

At session level, the meaning of each line may be defined as follows:
v= (protocol version);
o= (originator and session identifier);
s= (session name);
c= (connection information -- not required if included in all media);
t= (time the session is active); and
a= (zero or more session attribute lines).

At media level, the meaning of each line may be defined as follows:
m= (media name and transport address);
c= (connection information -- optional if included at session level); and
a= (zero or more media attribute lines).

RFC 4566 further states that the attribute mechanism ("a=") is the primary means for extending SDP session description and tailoring it to particular applications or media and that each media description starts with an "m=" field.

A media field has several sub-fields: m=<media> <port> <proto> <fmt> ... where
<media> is the media type (e.g. "audio", "video", "text", etc.);
<port> is the transport port to which the media stream is sent. The meaning of the transport port depends on the network being used as specified in the relevant "c=" field and on the transport protocol defined in the <proto> sub-field of the media field;
<proto> is the transport protocol; and
<fmt> is a media format description.

If the <proto> sub-field is "RTP/AVP" or "RTP/AVPF" the <fmt> sub-fields contain RTP payload type numbers. The RTP payload type is an integer (over 7 bits) inserted in the header of RTP packets to identify the data format carried out in the payload of the RTP packet. The numbers 0 to 95 correspond to numbers systematically allocated to certain kind of data (e.g. "0" represents encoded data having the PCMU type, "9" corresponds to data having the G722 type, etc. Values 96 to 127 are dynamically attributed in order to allow the extensibility of supported format.

Typically, for values 96 to 127, the attribute "a=rtpmap" in the SDP description associates an encoding / packetization format of the data with the value of the payload type.

Regarding RTP payload type numbers, the "a=rtpmap" attribute at media level provides the mapping from an RTP payload type number to a media encoding name that identifies the payload format of RTP packets.

In the SDP descriptions of Tables 1 to 3 and 5 to 6 of the Appendix, the "a=rtpmap" attribute signals that the payload type 96 corresponds to the media encoding format H.264. In the SDP description of Table 4 of the Appendix, the "a=rtpmap" attribute signals that the payload type 96 corresponds to the media encoding format H.265. The "a=fmtp" attribute may be used to specify format parameters (e.g. encoding parameters: e.g. profile, packetization mode, parameter sets).

For the sake of illustration, the first media description (e.g. the first "m=" line in Table 1) represents a media stream corresponding to tile 1 in Figure 2a, the second media description (e.g. the second "m=" line in Table 1) represents a media stream corresponding to tile 2 in Figure 2a, and the third media description (e.g. the third "m=" line in Table 1) represents a media stream corresponding to the full panorama in Figure 2a.

According to embodiments of the invention, the spatial relationship between media data carried in media streams is made by creating a group and associating the media streams with the group. Accordingly, a group may represent media streams that may be rendered or played simultaneously, for example media streams representing spatial sub-parts of the same video. A group may be expressed at the SDP level by grouping media lines using the framework described in RFC 5888.

As a consequence, by grouping media streams, a client device is able to select media streams that may be rendered simultaneously, according to its needs.

**Table 1** of the Appendix illustrates an SDP description (or manifest) according to a first embodiment.

According to this embodiment, a media identifier is associated with each media stream, using the media attribute "a=mid". Therefore, media identifier M1 is assigned to the first media stream, media identifier M2 is assigned to the second media stream, and media identifier M3 is assigned to the third media stream. These identifiers may be used to associate media streams with groups.

Still according to the embodiment described by reference to Table 1 of the Appendix, the session attribute "a=group" is used to indicate that the media streams identified with the media identifiers M1, M2 and M3 are grouped together.

Still according to the embodiment described by reference to Table 1 of the Appendix, a new semantic extension denoted here "SRD" (for Spatial Relationship Description) is defined to express that media streams M1, M2, and M3 belong to the same group of the SRD type, the media data of media streams of this type of group having particular spatial relationships and sharing the same spatial reference frame. This new semantic extension may be expressed as follows:
"a=GROUP:SRD M1 M2 M3".

In addition, a new media attribute "a=srd" is specified to give the spatial relationship of the media data carried in the media streams within the shared reference frame, for example according to Cartesian coordinates.

For the sake of illustration, the media attribute "a=srd" may be defined as follows (with a non-limitative list of parameters):
a=srd:<fmt> x=<xvalue> ;y=<yvalue> ;w=<widthvalue>;h=<heightvalue> where
<fmt> specifies the media format (or payload type) to which applies this attribute. The format must be one of the formats specified for the media on the media line "m=". At most one instance of this attribute is allowed for each format. According to particular embodiments, the value "*" indicates that this attribute applies to all the formats specified for the media;
<xvalue> and <yvalue> provide the absolute coordinates in pixels of the upper left corner of the spatial sub-part (or tile) represented by the media data of the media stream within the reference frame; and
<widthvalue> and <heightvalue> provide the size of the spatial sub-part (or tile) represented by the media data of the media stream (respectively width and height).

Optionally, following parameters can also be defined, for example separated with a semicolon (";"):
refw=<reference_widthvalue>
refh=<reference_heightvalue>
that can provide the size of the reference frame in width and height. These parameters make it possible to express the spatial sub-part coordinates in normalized coordinates instead of absolute coordinates. Positions (x, y) and sizes (w, h) of "a=srd" attributes sharing the same group of media streams may be compared after taking into account the size of the reference frame, i.e. after the x and w values are divided by the refw value and the y and h values divided by the refh value of their respective "a=srd" attributes. If normalized coordinates are in use then the parameters refw and refh must be defined at least for one of the media streams pertaining to a spatial relationship group.

As an alternative to Cartesian coordinates in a 2D space, coordinates of 360-degree spatial sub-parts can be described as a region within a sphere using, for example, yaw, pitch, and roll coordinates of the center of the region within a sphere, followed by ranges of variation for yaw and pitch (as illustrated in Figure 2b).

In such a case, a media attribute "a=vr" dedicated to spherical coordinates can be defined:
a=vr:<fmt> yaw=<yaw_value>; pitch=<pitch_value>; roll=<roll_value>; yaw-range=<range_value>; pitch-range=<range_value>

As another alternative, a media attribute "a=srd" may be defined with a parameter signaling the coordinate system to be used to express the spatial relationship, as in the following example:
a=srd:<fmt> coordinates={c; x=<xvalue>; y=<yvalue> ....} where character "c" signals Cartesian coordinates followed by the list of Cartesian coordinates representing the spatial sub-part region; and
a=srd:<fmt> coordinates={s; y=<yaw_value>; p=<pitch_value> ...} where character "s" signals Spherical coordinates followed by the list of spherical coordinates.

Accordingly, different type of coordinate system may be easily defined.

As an alternative, if the spatial relationship of the media data carried by the media streams within the shared reference frame varies over time, the new media attribute "a=srd" or "a=vr" may be omitted or only used to provide the spatial relationship of the first picture in the media streams. Another media stream is used to carry the metadata describing the spatial relationship coordinates of media data carried by an associated media stream. The association between a media stream carrying media data and the media stream carrying the associated spatial relationship coordinates varying over time may be defined using a media attribute "a=depend" (following the syntax defined in RFC 5583 section 5.2.2) with a new dependency semantic, e.g. '2dcc' (for 2D Cartesian coordinates) or by creating a new group semantic extension, e.g. 'DROI' for "Dynamic Region Of Interest".

Another optional parameter denoted "full-res" (as illustrated in Table 1 of the Appendix, regarding the third media stream) may also be defined to identify the media stream representing the full 2D or 360 panorama. Alternatively, the full panorama can be identified by comparing its sizes (w, h) with the sizes (refw, refh) of the reference frame.

Therefore, by defining each spatial sub-part as a separate media line ("m="), a client device is able to demultiplex incoming RTP packets to retrieve each separate spatial sub-part media stream by only using existing mechanisms offered by the RTP protocol (e.g. received port, synchronization source SSRC). Thus, it does not need to add extra information (e.g. specific RTP header extension) in each RTP packet.

**Table 2** of the Appendix illustrates an SDP description or manifest according to a second embodiment. According to this embodiment, the session attribute "a=group" is extended with a group identifier "id=<id_value>" (using a semicolon separator ";"in this example).

Such a group identifier makes it possible to reference a group within another group definition. Accordingly, in the example of Table 2 of the Appendix, the group identifier "id=G1" is used to indicate that the full panorama media stream having identifier M3 is an alternative to the spatial relationship group formed by the spatial sub-parts corresponding to the media streams having identifiers M1 and M2.

More precisely, in this example, the session attribute "a=group" with the semantic "SRD" defines a first group composed of media streams identified by "M1" and "M2" and the session attribute "a=group" with the semantic "FID" (defined in RFC 5888) defines a second group representing two alternative contents, either the media stream M3 or the virtually tiled video represented by the media stream group with identifier equal to "G1".

As an alternative, rather than using the semantic "FID", it is also possible to define a new semantic, e.g. "ALT", that explicitly expresses that the media or group identifiers are alternatives.

Still as an alternative, rather than extending the existing "a=group" attribute, it is also possible to define a new session attribute, e.g. "a=namedgroup" with a definition such as the following one:
group-attribute = "a=namedgroup:" identifier-tag semantic-tag *(SP identification-tag) where,
identification-tag is provided by the media attribute "a=mid";
identifier-tag is the identifier of the group; and
semantic-tag represents the semantic of the group (e.g. spatial relationship "SRD"), a semantic-tag being a token as defined in RFC 4566.

For instance, a named group line in the SDP description may look like the following one:
a=namedgroup: G1 SRD M1 M2 where,
G1 is the identifier of the group;
"SRD" is the semantic (i.e. spatial relationship) represented by this group; and M1 and M2 are two media identifiers that compose this group.

**Table 3** of the Appendix illustrates an SDP description or manifest according to a third embodiment.

According to this embodiment, new parameters are defined at session level to describe the reference frame or the grid of tiles. These new parameters can be defined either as parameter extensions to the "a=group" session attribute as it is described above for a group identifier parameter or within a new session attribute "a=srd" as represented in Table 3.

In the SDP description or manifest of Table 3, the reference frame associated with the spatial relationship group having identifier "G1" is expressed by the new session attribute "a=srd". The syntax is similar to the media attribute "a=srd" described in reference to Table 1 and may be expressed as:
a=srd:<fmt> refw=<refw> refh=<refh>

The <fmt> parameter identifies the associated spatial relationship group (i.e. G1 in the given example).

As described, the <refw> and <refh> parameters provide the size of the reference frame in width and height. These parameters make it possible to express the spatial sub-part coordinates in normalized coordinates.

In addition to these parameters, new parameters can also be defined to describe the grid of tiles in terms of number of columns and rows:
col=<number of columns>
row=<number of rows>
col_id=<column index>
row_id=<row index>
col and row parameters would define the reference frame at session level and col_id and row_id would be used at media level to provide the index in the grid for a particular media stream.

According to embodiments, when more than one tile is provided as one media stream in the SDP description, additional parameters can be provided to indicate the number of tiles in the horizontal and vertical dimensions. For the sake of illustration, these parameters may be the following:
col_nb=<nb_column >
row_nb=<nb_row >

Taking the example illustrated in Figure 2a, the sub-parts tile1 and tile2 may be described as follow:
a=srd:G1 refw=3840; refh=1080; col=2; row=1 (instead of a=srd:G1 refw=3840; refh=1080)

In such a case, the description of the tile identified with "M1" identifier may be the following:
a=srd:96 col_id=1;row_id=1 (instead of a=srd:96 x=0;y=0;w=1920;h=1080) the description of the tile identified with "M2" identifier may be the following:
a=srd:96 col_id=2;row_id=1 (instead of a=srd:96 x=1920;y=0;w=1920;h=1080) and the description of the tile identified with "M3" identifier may be the following:
a=srd:96 col_id=1;row_id=1; col_nb=2; row_nb=1 (instead of a=srd:96 x=0;y=0;w=3840;h=1080;ful_res)

**Table 4** of the Appendix illustrates an SDP description or manifest according to a fourth embodiment.

According to this embodiment, each of the spatial sub-parts identified with identifiers M1 and M2, that are described in the media lines ("m="), corresponds to a motion-constrained tile sub-bitstream from a tiled HEVC full panorama media stream identified with identifier M3. In this case, the media sub-bitstreams received by the client device should be combined by the latter before being decoded by a single instance of a tile-enabled HEVC decoder.

According to embodiments, a Media Decoding Dependency ("DDP" as defined in RFC 5583) group is defined (as illustrated in Table 4) in order to signal to the client device that media sub-bitstreams should be combined before decoding and for grouping the related media streams corresponding to spatial sub-part sub-bitstreams (M1 and M2 in the example given in Table 4).

As an alternative, rather than reusing the Media Decoding Dependency ("DDP") grouping type, a new grouping type can be defined, e.g. Single Decoding Stream ("SDS"), to signal explicitly that media sub-bitstreams should be combined before decoding.

If the tiles that compose a group of tiles as defined above are not all independent from each other (i.e. some of the tiles are not motion-constrained and there remain some decoding dependencies with some other tiles of the group), then the decoding dependency relationship, if any exists, is further expressed by defining a new dependency semantic, for example "tile", in a media attribute "a=depend" (following the syntax defined in RFC 5583 section 5.2.2) with the list of media streams (tiles) it depends on.

For the sake of illustration, the tile having media identifier M1 in Table 4 has a dependency on the tile having media identifier M2, and the tile having media identifier M2 does not depend on any other tile. Therefore, the SDP description in Table 4 includes a group definition signaling that media sub-bitstreams carried in media streams M1 and M2 pertain to a decoding dependency group (a=group:DDP M1 M2). In addition, the description of media stream M1 includes a line specifying that this media depends on the media stream M2 (with payload type 96) and that this coding dependency is of type "tile" (a=depend:96 tile M2:96). It is to be noted that media stream M2 does not contain any "a=depend" line because it does not depend on any other media stream.

As an alternative, motion-constrained tile sub-bitstreams may share some common data (e.g. PPS and SPS) carried in an additional media stream pertaining to the same dependency group. In such a case, the client device should combine each media stream carrying independently decodable media sub-bitstreams with at least this additional media stream before decoding. The decoding dependency relationship would be further expressed in media streams carrying the media sub-bitstreams by defining a new dependency semantic, for example "tbas", in a media attribute "a=depend" (following the syntax defined in RFC 5583 section 5.2.2) with the identification tag of the media stream carrying the common data it depends on.

**Table 5** of the Appendix illustrates an SDP description or manifest according to a fifth embodiment.

According to this embodiment, extensions provided by RTP and SDP description are used to organize the transport of media streams in SDP descriptions.

It is to be recalled that according to RFC 7656 and draft-ietf-avtcore-rtp-multi-stream, RTP and SDP descriptions offer multiple ways to group or multiplex media streams, to associate RTP sources (representing media streams), and to carry these RTP sources over RTP connection sessions:
- several RTP sources can be multiplexed within a single RTP session (also known as SSRC-multiplexing),
- multiple RTP sessions running in parallel can be used to carry related media streams, or
- multiple media description lines in an SDP description can be mapped into a single RTP session by using a multiplexing scheme called BUNDLE.

In case of SSRC-multiplexing, multiple media streams can be carried in a single media line ("m="). The RTP packets of each media stream are multiplexed in a single RTP connection session and differentiated thanks to the value of the SSRC field in the RTP packet header.

It is to be noted that RFC 5576 defines the new media attributes "a=ssrc-group" and "a=ssrc" that make it possible to reuse the grouping mechanism framework from RFC 5888 for grouping multiple sources (SSRC) within a single RTP session. The media attribute "a=ssrc-group" is equivalent to the session attribute "a=group". The media attribute "a=ssrc" makes it possible to reuse all existing media attributes in the context of an RTP source. Thus the new semantic "SRD" and new media attribute "a=srd" defined in this invention within the grouping mechanism framework from RFC 5888 can be directly reused in the context of SSRC-multiplexing.

One potential issue when the number of SSRCs in use during a media presentation increases is that the number of RTCP feedbacks also increases because the client device explicitly has to provide reports for each SSRC it receives. However, this issue can be mitigated by using mechanisms described in IETF draft draft-ietf-avtcore-rtp-multi-stream-optimization to group RTCP feedbacks by reporting only once for all SSRCs that use the same network path.

The different embodiments are directly compatible with the various media streams transport organization currently defined in RTP and SDP. Thus, they keep orthogonal the declaration of the media streams for video sub-parts and how they are actually transported (e.g. single/multi session).

**Table 6** of the Appendix illustrates an SDP description or manifest according to a sixth embodiment.

This embodiment aims at showing that the invention can be carried out with other media stream transport organization.

In this embodiment, the media streams are grouped according to IETF draft draft-ietf-mmusic-sdp-bundle-negotiation for signaling that multiple media lines should use one single RTP connection (also known as bundle grouping).

In this example, the media streams having media identifiers M1 and M2 pertain to two groups:
- one group with the group type "SRD" (a=group:SRD M1 M2) signaling that they are spatial parts of the same reference frame, their spatial properties being provided by the media attributes "a=srd" (i.e. a=srd:96 x=0;y=0;w=1920;h=1080 and a=srd:96 x=1920;y=0;w=1920;h=1080); and
- one group with the group type "BUNDLE" (a=group:BUNDLE M1 M2) signaling that these media streams will be multiplexed within one single RTP session, media attributes "a=extmap" (a=extmap 1 urn:ietf:params:rtp-hdrext:sdes:mid and a=extmap 1 urn:ietf:params:rtp-hdrext:sdes:mid) indicating that the RTP header extension named urn:ietf:params:rtp-hdrext:sdes:mid will be used to identify each media stream within the multiplexed media stream.

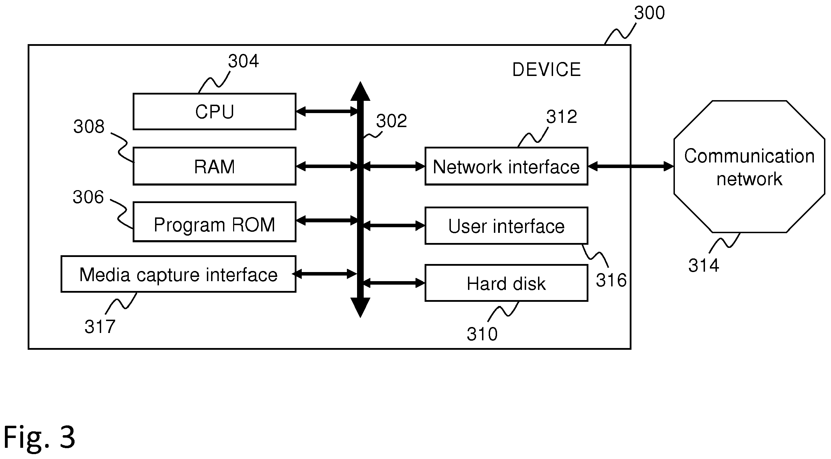

**Figure 3** represents a block diagram of a server or of a client device in which steps of one or more embodiments may be implemented.

According to embodiments, device 300 comprises a communication bus referenced 302, a central processing unit (CPU) referenced 304, a program ROM referenced 306, and a main memory referenced 308 that are connected via communication bus 302. Central processing unit 304 is capable of executing instructions stored within program ROM 306 on powering up of the device and instructions relating to a software application stored within main memory 308 after the powering up. Main memory 308 is for example of the Random Access Memory (RAM) type which functions as a working area of CPU 304 via communication bus 302, and the memory capacity thereof can be expanded by an optional RAM connected to an expansion port (not illustrated). Instructions relating to the software application may be loaded into the main memory 308 from a hard disk (HD) referenced 310 or program ROM 306 for example.

Reference numeral 312 designates a network interface that makes it possible to connect device 300 to communication network 314. The software application, when executed by CPU 304, is adapted to react to requests received through the network interface and to provide data streams and requests via the network to other devices.

According to embodiments, device 300 may comprise user interface 316 and/or media capture interface 317. User interface 316 can be used to display information to and/or receive inputs from a user. Media capture interface 317 can be used to capture video and/or audio contents. It may represent one or more video cameras or microphones to provide one or more media streams.

It should be pointed out here that according to other embodiments, device 300 may comprise one or more dedicated integrated circuits (ASIC) for managing the reception and/or transmission of multimedia bit-streams, that are capable of implementing the method as described with reference to Figure 1. These integrated circuits are for example and non-restrictively, integrated into an apparatus for generating or displaying video sequences and/or for listening to audio sequences.

Embodiments of the invention may be embedded in a device such as a camera, a smartphone, a TV or a tablet that acts as a remote controller for a TV, or a head-mounted display for example to zoom into a particular region of interest. They can also be used from the same devices to have a personalized browsing experience of a TV program or a video surveillance system by selecting specific areas of interest. Another usage of these devices by a user is to share selected sub-parts of his/her preferred videos with other connected devices. They can also be used in a smartphone, tablet or head-mounted display to monitor what happens in a specific area of a building placed under surveillance provided that the surveillance camera supports the generation part of this invention.

Many further modifications and variations will suggest themselves to those versed in the art upon making reference to the foregoing illustrative embodiments, which are given by way of example only and which are not intended to limit the scope of the invention, that scope being determined solely by the appended claims. In particular, the different features from different embodiments may be interchanged, where appropriate.

### APPENDIX

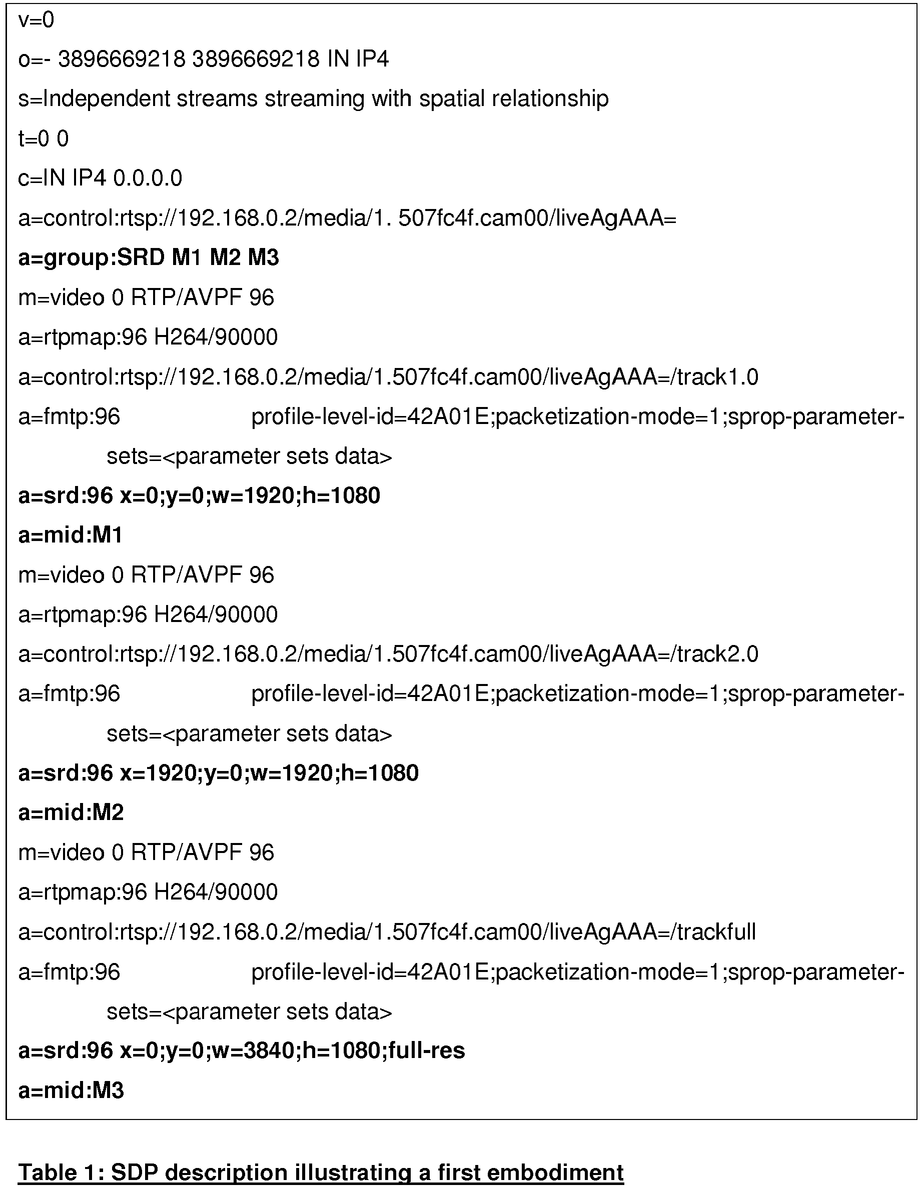

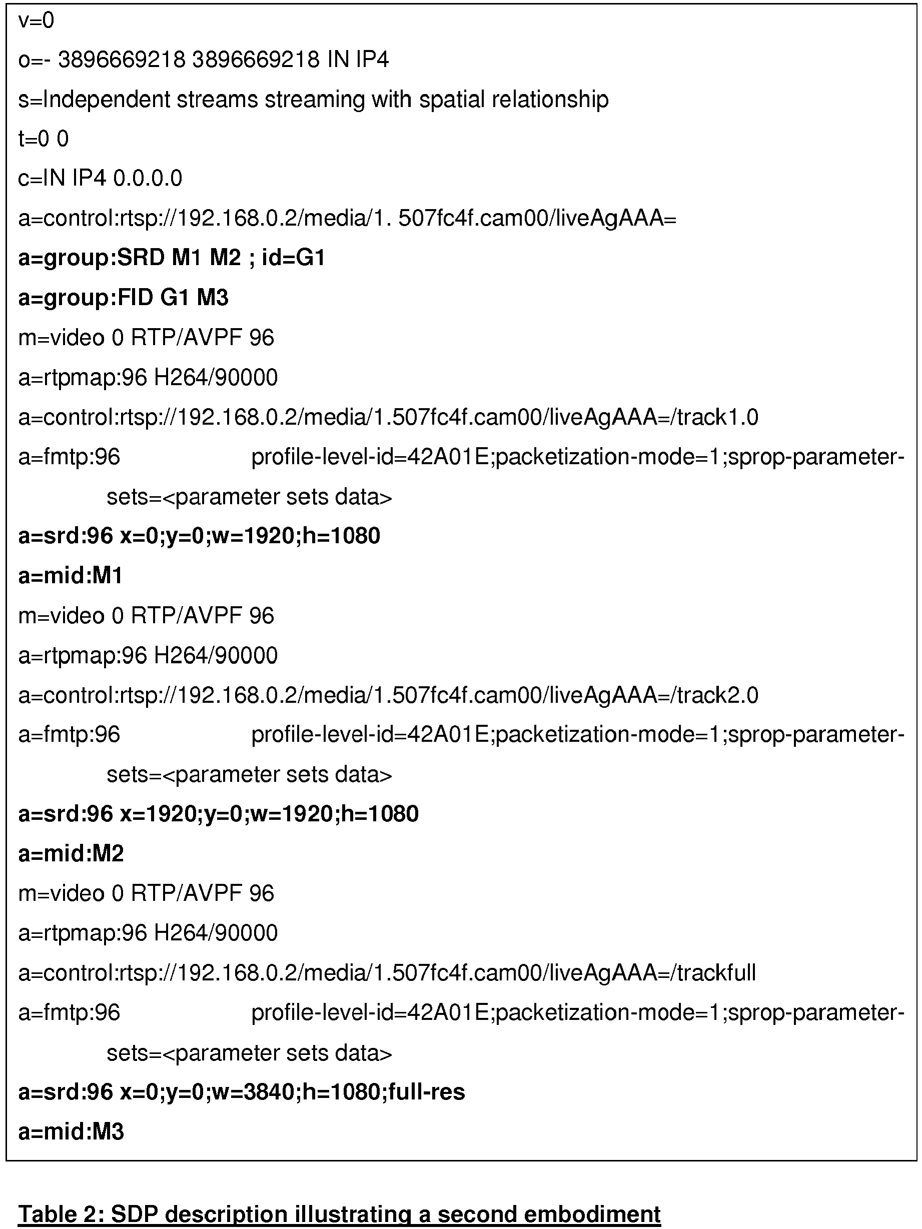

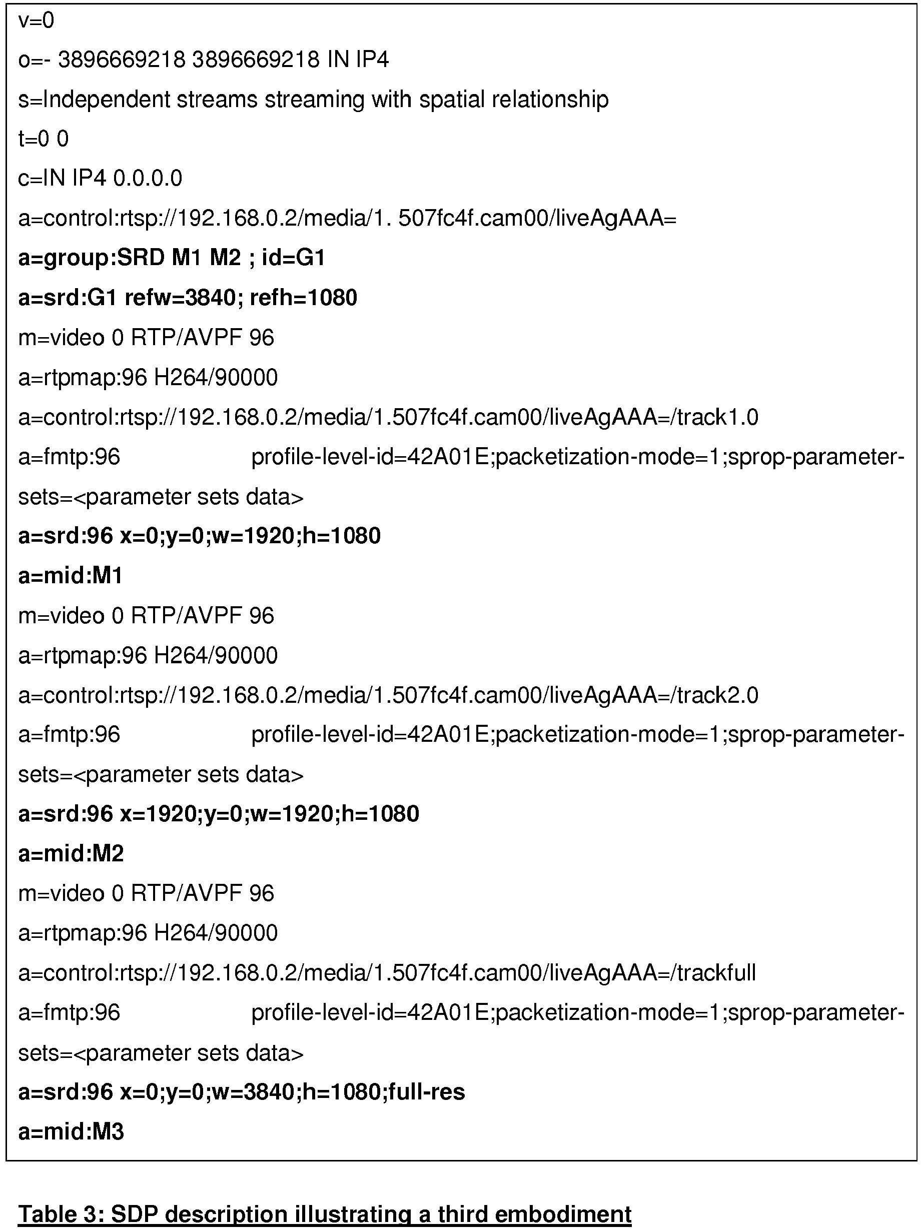

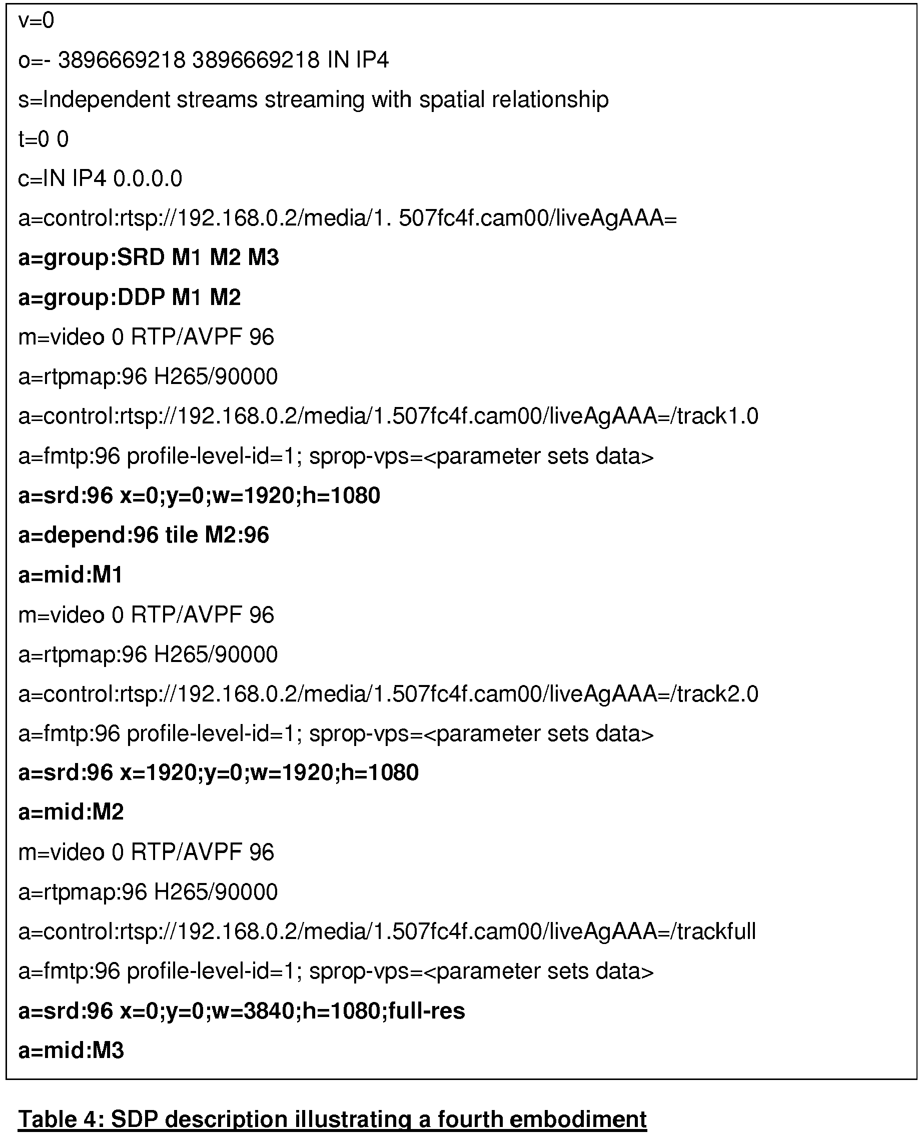

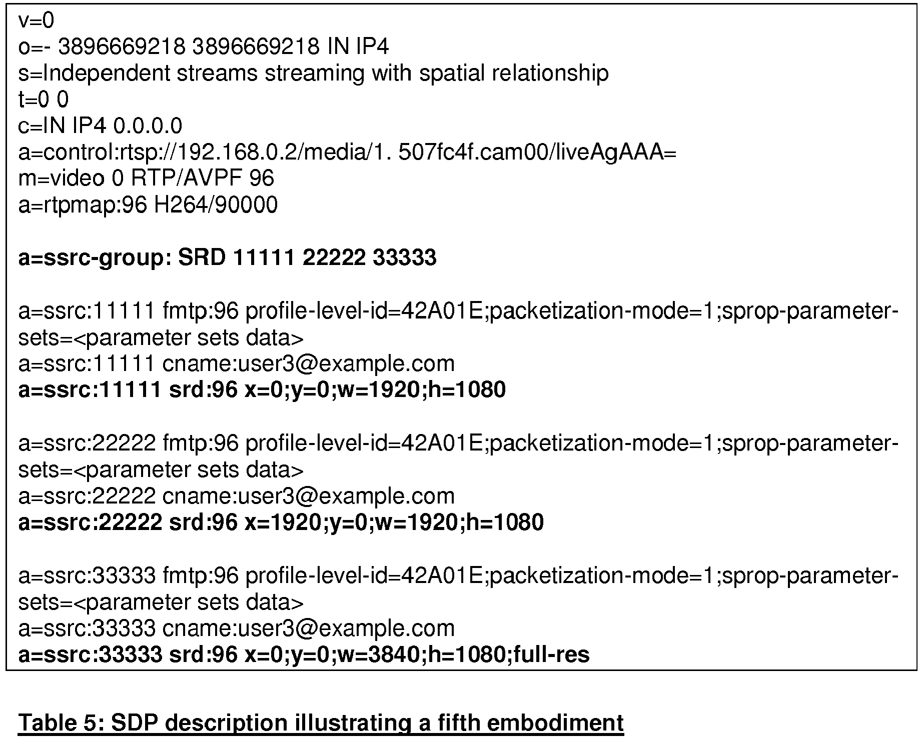

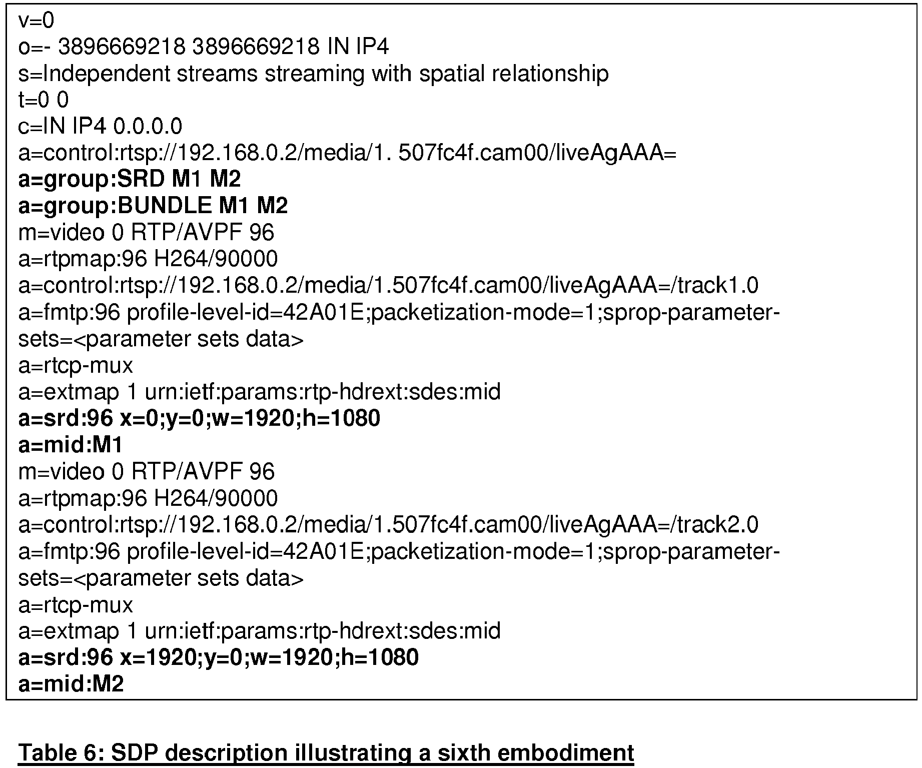

## Claims

1. A method for transmitting at least two video streams, each of the at least two video streams carrying encoded video data, the encoded video data respectively carried by the at least two video streams being decodable independently from each other, the method comprising:
sending a Session Description Protocol, SDP, description of video streams of a plurality of video streams including the at least two video streams;
in response to sending the SDP description, receiving a request for obtaining the at least two video streams;
transmitting the at least two video streams according to the received request,
wherein the SDP description comprises a session level section and a plurality of media level sections for each of the plurality of video streams, wherein the session level section comprises an SDP group attribute to indicate a spatial relationship, within a same shared spatial reference frame, between video data carried by the at least two video streams; wherein the SDP group attribute comprises video stream grouping information; wherein the video stream grouping information comprises a set of identifiers of video streams of the plurality of video streams and a group semantic signalling that video data carried by the identified video streams have a spatial relationship, the set of identifiers comprising at least an identifier of each of the at least two video streams; and
wherein the SDP description further comprises, in the media level section for each of the at least two video streams, the identifier of the video stream and an SDP spatial relationship attribute to provide location information of the video data carried by the corresponding video stream within the same shared spatial reference frame.

2. The method of claim 1, wherein the video stream grouping information further comprises an identifier of a set of identifiers of video streams of the plurality of video streams.

3. The method of claim 1 or 2, wherein information directed to characteristics of the same shared reference frame is associated with the SDP group attribute, the spatial relationship of the video data carried in the video streams being expressed within the same shared reference frame according to Cartesian coordinates or according to regions within a sphere.

4. The method of any one of claims 1 to 3, wherein the location information comprises information to indicate a size and a position of video data within the same shared reference frame.

5. A method for receiving at least two video streams, each of the at least two video streams carrying encoded video data, the encoded video data respectively carried by the at least two video streams being decodable independently from each other, the method comprising:
receiving a Session Description Protocol, SDP, description of video streams of a plurality of video streams including the at least two video streams, wherein the SDP description comprises a session level section and a plurality of media level sections for each of the plurality of video streams, wherein the session level section comprises an SDP group attribute to indicate a spatial relationship, within a same shared spatial reference frame, between video data carried by the at least two video streams, wherein the SDP group attribute comprises video stream grouping information, wherein the video stream grouping information comprises a set of identifiers of video streams of the plurality of video streams and a group semantic signalling that video data carried by the identified video streams have a spatial relationship, the set of identifiers comprising at least an identifier of each of the at least two video streams, and wherein the SDP description further comprises, in the media level section for each of the at least two video streams, the identifier of the video stream and an SDP spatial relationship attribute to provide location information of the video data carried by the corresponding video stream within the same shared spatial reference frame;
determining a spatial relationship between the at least two video streams from the SDP group attribute and in response to determining the spatial relationship, transmitting a request for obtaining the at least two video streams; and
in response to transmitting the request, receiving the at least two requested video streams.

6. A computer program product for a programmable apparatus, the computer program product comprising instructions for carrying out each step of the method according to any one of claims 1 to 5 when the program is loaded and executed by a programmable apparatus.

7. A non-transitory information storage device storing instructions of a computer program for implementing the method according to any one of claims 1 to 5.

8. A device for transmitting at least two video streams, each of the at least two video streams carrying encoded video data, the encoded video data respectively carried by the at least two video streams being decodable independently from each other, the device comprising a microprocessor configured for carrying out the steps of:
sending a Session Description Protocol, SDP, description of video streams of a plurality of video streams including the at least two video streams;
in response to sending the SDP description, receiving a request for obtaining the at least two video streams;
transmitting the at least two video streams according to the received request,
wherein the SDP description comprises a session level section and a plurality of media level sections for each of the plurality of video streams, wherein the session level section comprises an SDP group attribute to indicate a spatial relationship, within a same shared spatial reference frame, between video data carried by the at least two video streams; wherein the SDP group attribute comprises video stream grouping information; wherein the video stream grouping information comprises a set of identifiers of video streams of the plurality of video streams and a group semantic signalling that video data carried by the identified video streams have a spatial relationship, the set of identifiers comprising at least an identifier of each of the at least two video streams; and
wherein the SDP description further comprises, in the media level section for each of the at least two video streams, the identifier of the video stream and an SDP spatial relationship attribute to provide location information of the video data carried by the corresponding video stream within the same shared spatial reference frame.

9. A device for receiving at least two video streams, each of the at least two video streams carrying encoded video data, the encoded video data respectively carried by the at least two video streams being decodable independently from each other, the device comprising a microprocessor configured for carrying out the steps of:
receiving a Session Description Protocol, SDP, description of video streams of a plurality of video streams including the at least two video streams, wherein the SDP description comprises a session level section and a plurality of media level sections for each of the plurality of video streams, wherein the session level section comprises an SDP group attribute to indicate a spatial relationship, within a same shared spatial reference frame, between video data carried by the at least two video streams, wherein the SDP group attribute comprises video stream grouping information, wherein the video stream grouping information comprises a set of identifiers of video streams of the plurality of video streams and a group semantic signalling that video data carried by the identified video streams have a spatial relationship, the set of identifiers comprising at least an identifier of each of the at least two video streams, and wherein the SDP description further comprises, in the media level section for each of the at least two video streams, the identifier of the video stream and an SDP spatial relationship attribute to provide location information of the video data carried by the corresponding video stream within the same shared spatial reference frame;
determining a spatial relationship between the at least two video streams from the SDP group attribute and in response to determining the spatial relationship, transmitting a request for obtaining the at least two video streams; and
in response to transmitting the request, receiving the at least two requested video streams.

## Patentansprüche

1. Verfahren zur Übertragung von mindestens zwei Videostreams, wobei jeder der mindestens zwei Videostreams kodierte Videodaten trägt, wobei die kodierten Videodaten, die jeweils von den mindestens zwei Videostreams getragen werden, unabhängig voneinander dekodierbar sind, wobei das Verfahren umfasst:
Senden einer Sitzungsbeschreibungsprotokoll-, SDP-, Beschreibung von Videostreams einer Vielzahl von Videostreams, einschließlich der mindestens zwei Videostreams;
in Reaktion auf das Senden der SDP-Beschreibung, Empfangen einer Anforderung zum Erhalten der mindestens zwei Videostreams;
Übertragen der mindestens zwei Videostreams gemäß der empfangenen Anforderung, wobei die SDP-Beschreibung einen Sitzungsebenen-Abschnitt und eine Vielzahl von Medienebenen-Abschnitten für jeden der Vielzahl von Videostreams umfasst, wobei der Sitzungsebenen-Abschnitt ein SDP-Gruppenattribut umfasst, um eine räumliche Beziehung innerhalb eines gleichen gemeinsamen räumlichen Bezugsframes zwischen Videodaten anzuzeigen, die von den mindestens zwei Videostreams getragen werden;
wobei das SDP-Gruppenattribut Videostream-Gruppierungsinformationen umfasst;
wobei die Videostream-Gruppierungsinformation einen Satz von Identifikatoren von Videostreams der Vielzahl von Videostreams und eine Gruppensemantik umfasst, die signalisiert, dass Videodaten, die von den identifizierten Videostreams getragen werden, eine räumliche Beziehung aufweisen, wobei der Satz von Identifikatoren mindestens einen Identifikator von jedem der mindestens zwei Videostreams umfasst; und
wobei die SDP-Beschreibung ferner in dem Medienebenen-Abschnitt für jeden der mindestens zwei Videostreams den Identifikator des Videostreams und ein SDP-Raumbeziehungsattribut umfasst, um Standortinformationen der Videodaten bereitzustellen, die von dem entsprechenden Videostream innerhalb desgleichen gemeinsamen räumlichen Bezugsframes getragen werden.

2. Verfahren nach Anspruch 1, wobei die Videostream-Gruppierungsinformationen ferner einen Identifikator eines Satzes von Identifikatoren von Videostreams aus der Vielzahl von Videostreams umfassen.

3. Verfahren nach Anspruch 1 oder 2, wobei Informationen, die auf Merkmale desgleichen gemeinsamen Bezugsframes gerichtet sind, dem SDP-Gruppenattribut zugeordnet sind, wobei die räumliche Beziehung der in den Videostreams getragenen Videodaten innerhalb desgleichen gemeinsamen Bezugsframes gemäß kartesischen Koordinaten oder gemäß Regionen innerhalb einer Kugel ausgedrückt wird.

4. Verfahren nach einem der Ansprüche 1 bis 3, wobei die Standortinformationen Informationen zur Angabe einer Größe und einer Position von Videodaten innerhalb desgleichen gemeinsamen Bezugsframes umfassen.

5. Verfahren zum Empfangen von mindestens zwei Videostreams, wobei jeder der mindestens zwei Videostreams kodierte Videodaten trägt, wobei die kodierten Videodaten, die jeweils von den mindestens zwei Videostreams getragen werden, unabhängig voneinander dekodierbar sind, wobei das Verfahren umfasst:
Empfangen einer Sitzungsbeschreibungsprotokoll-, SDP-, Beschreibung eines Videostreams einer Vielzahl von Videostreams, einschließlich der mindestens zwei Videostreams, wobei die SDP-Beschreibung einen Sitzungsebenen-Abschnitt und eine Vielzahl von Medienebenen-Abschnitten für jeden der Vielzahl von Videostreams umfasst, wobei der Sitzungsebenen-Abschnitt ein SDP-Gruppenattribut umfasst, um eine räumliche Beziehung innerhalb eines gleichen gemeinsamen räumlichen Bezugsframes zwischen Videodaten anzuzeigen, die von den mindestens zwei Videostreams getragen werden, wobei das SDP-Gruppenattribut Videostream-Gruppierungsinformationen umfasst, wobei die Videostream-Gruppierungsinformation einen Satz von Identifikatoren von Videostreams der Vielzahl von Videostreams und eine Gruppensemantik umfasst, die signalisiert, dass Videodaten, die von den identifizierten Videostreams getragen werden, eine räumliche Beziehung aufweisen, wobei der Satz von Identifikatoren mindestens einen Identifikator von jedem der mindestens zwei Videostreams umfasst, und wobei die SDP-Beschreibung ferner in dem Medienebenen-Abschnitt für jeden der mindestens zwei Videostreams den Identifikator des Videostreams und ein SDP-Raumbeziehungsattribut umfasst, um Standortinformationen der Videodaten bereitzustellen, die von dem entsprechenden Videostream innerhalb desgleichen gemeinsamen räumlichen Bezugsframes getragen werden;
Bestimmen einer räumlichen Beziehung zwischen den mindestens zwei Videostreams aus dem SDP-Gruppenattribut und in Reaktion auf die Bestimmung der räumlichen Beziehung, Übertragen einer Anforderung zum Erhalten der mindestens zwei Videostreams; und
Empfangen der mindestens zwei angeforderten Videostreams als Reaktion auf das Übertragen der Anforderung.

6. Computerprogrammprodukt für ein programmierbares Gerät, wobei das Computerprogrammprodukt Anweisungen zur Durchführung jedes Schrittes des Verfahrens nach einem der Ansprüche 1 bis 5 umfasst, wenn das Programm von einem programmierbaren Gerät geladen und ausgeführt wird.

7. Nichtflüchtige Informationsspeichervorrichtung, die Anweisungen eines Computerprogramms zum Implementieren des Verfahrens nach einem der Ansprüche 1 bis 5 speichert.

8. Vorrichtung zur Übertragung von mindestens zwei Videostreams, wobei jeder der mindestens zwei Videostreams kodierte Videodaten trägt, wobei die kodierten Videodaten, die jeweils von den mindestens zwei Videostreams getragen werden, unabhängig voneinander dekodierbar sind, wobei die Vorrichtung einen Mikroprozessor umfasst, der dazu eingerichtet ist die folgenden Schritte auszuführen:
Senden einer Sitzungsbeschreibungsprotokoll-, SDP-, Beschreibung von Videostreams einer Vielzahl von Videostreams, einschließlich der mindestens zwei Videostreams;
in Reaktion auf das Senden der SDP-Beschreibung, Empfangen einer Anforderung zum Erhalten der mindestens zwei Videostreams;
Übertragen der mindestens zwei Videostreams gemäß der empfangenen Anforderung, wobei die SDP-Beschreibung einen Sitzungsebenen-Abschnitt und eine Vielzahl von Medienebenen-Abschnitten für jeden der Vielzahl von Videostreams umfasst, wobei der Sitzungsebenen-Abschnitt ein SDP-Gruppenattribut umfasst, um eine räumliche Beziehung innerhalb eines gleichen gemeinsamen räumlichen Bezugsframes zwischen Videodaten anzuzeigen, die von den mindestens zwei Videostreams getragen werden;
wobei das SDP-Gruppenattribut Videostream-Gruppierungsinformationen umfasst;
wobei die Videostream-Gruppierungsinformation einen Satz von Identifikatoren von Videostreams der Vielzahl von Videostreams und eine Gruppensemantik umfasst, die signalisiert, dass Videodaten, die von den identifizierten Videostreams getragen werden, eine räumliche Beziehung aufweisen, wobei der Satz von Identifikatoren mindestens einen Identifikator von jedem der mindestens zwei Videostreams umfasst; und
wobei die SDP-Beschreibung ferner in dem Medienebenen-Abschnitt für jeden der mindestens zwei Videostreams den Identifikator des Videostreams und ein SDP-Raumbeziehungsattribut umfasst, um Standortinformationen der Videodaten bereitzustellen, die von dem entsprechenden Videostream innerhalb desgleichen gemeinsamen räumlichen Bezugsframes getragen werden.

9. Vorrichtung zum Empfangen von mindestens zwei Videostreams, wobei jeder der mindestens zwei Videostreams kodierte Videodaten trägt, wobei die kodierten Videodaten, die jeweils von den mindestens zwei Videostreams getragen werden, unabhängig voneinander dekodierbar sind, wobei die Vorrichtung einen Mikroprozessor umfasst, der dazu eingerichtet ist die folgenden Schritte auszuführen:
Empfangen einer Sitzungsbeschreibungsprotokoll-, SDP-, Beschreibung eines Videostreams einer Vielzahl von Videostreams, einschließlich der mindestens zwei Videostreams, wobei die SDP-Beschreibung einen Sitzungsebenen-Abschnitt und eine Vielzahl von Medienebenen-Abschnitten für jeden der Vielzahl von Videostreams umfasst, wobei der Sitzungsebenen-Abschnitt ein SDP-Gruppenattribut umfasst, um eine räumliche Beziehung innerhalb eines gleichen gemeinsamen räumlichen Bezugsframes zwischen Videodaten anzuzeigen, die von den mindestens zwei Videostreams getragen werden, wobei das SDP-Gruppenattribut Videostream-Gruppierungsinformationen umfasst, wobei die Videostream-Gruppierungsinformation einen Satz von Identifikatoren von Videostreams der Vielzahl von Videostreams und eine Gruppensemantik umfasst, die signalisiert, dass Videodaten, die von den identifizierten Videostreams getragen werden, eine räumliche Beziehung aufweisen, wobei der Satz von Identifikatoren mindestens einen Identifikator von jedem der mindestens zwei Videostreams umfasst, und wobei die SDP-Beschreibung ferner in dem Medienebenen-Abschnitt für jeden der mindestens zwei Videostreams den Identifikator des Videostreams und ein SDP-Raumbeziehungsattribut umfasst, um Standortinformationen der Videodaten bereitzustellen, die von dem entsprechenden Videostream innerhalb desgleichen gemeinsamen räumlichen Bezugsframes getragen werden;
Bestimmen einer räumlichen Beziehung zwischen den mindestens zwei Videostreams aus dem SDP-Gruppenattribut und in Reaktion auf die Bestimmung der räumlichen Beziehung, Übertragen einer Anforderung zum Erhalten der mindestens zwei Videostreams; und
Empfangen der mindestens zwei angeforderten Videostreams als Reaktion auf das Übertragen der Anforderung.

## Revendications

1. Procédé pour transmettre au moins deux flux vidéo, chacun des au moins deux flux vidéo transportant des données vidéo encodées, les données vidéo encodées transportées respectivement par les au moins deux flux vidéo étant décodables indépendamment les unes des autres, le procédé comprenant les étapes consistant à :
envoyer une description de protocole de description de session, SDP, de flux vidéo d'une pluralité de flux vidéo incluant les au moins deux flux vidéo ;
en réponse à l'envoi de la description SDP, recevoir une demande pour obtenir les au moins deux flux vidéo ;
transmettre les au moins deux flux vidéo selon la demande reçue,
dans lequel la description SDP comprend une section de niveau de session et une pluralité de sections de niveau de média pour chacun de la pluralité de flux vidéo, dans lequel la section de niveau de session comprend un attribut de groupe SDP pour indiquer une relation spatiale, à l'intérieur d'un même repère spatial partagé, entre des données vidéo transportées par les au moins deux flux vidéo ;
dans lequel l'attribut de groupe SDP comprend des informations de regroupement de flux vidéo ;
dans lequel les informations de regroupement de flux vidéo comprennent un ensemble d'identifiants de flux vidéo de la pluralité de flux vidéo et une sémantique de groupe signalant que des données vidéo transportées par les flux vidéo identifiés ont une relation spatiale, l'ensemble d'identifiants comprenant au moins un identifiant de chacun des au moins deux flux vidéo ; et
dans lequel la description SDP comprend en outre, dans la section de niveau de média pour chacun des au moins deux flux vidéo, l'identifiant du flux vidéo et un attribut de relation spatiale SDP pour fournir des informations de localisation des données vidéo transportées par le flux vidéo correspondant à l'intérieur du même repère spatial partagé.

2. Procédé selon la revendication 1, dans lequel les informations de regroupement de flux vidéo comprennent en outre un identifiant d'un ensemble d'identifiants de flux vidéo de la pluralité de flux vidéo.

3. Procédé selon la revendication 1 ou 2, dans lequel des informations ayant pour objet des caractéristiques du repère partagé sont associées à l'attribut de groupe SDP, la relation spatiale des données vidéo transportées dans les flux vidéo étant exprimée à l'intérieur du même repère partagé selon des coordonnées cartésiennes ou selon des régions à l'intérieur d'une sphère.

4. Procédé selon l'une quelconque des revendications 1 à 3, dans lequel les informations de localisation comprennent des informations pour indiquer une taille et une position de données vidéo à l'intérieur du même repère partagé.

5. Procédé pour recevoir au moins deux flux vidéo, chacun des au moins deux flux vidéo transportant des données vidéo encodées, les données vidéo encodées transportées respectivement par les au moins deux flux vidéo étant décodables indépendamment les unes des autres, le procédé comprenant les étapes consistant à :
recevoir une description de protocole de description de session, SDP, de flux vidéo d'une pluralité de flux vidéo incluant les au moins deux flux vidéo, dans lequel la description SDP comprend une section de niveau de session et une pluralité de sections de niveau de média pour chacun de la pluralité de flux vidéo, dans lequel la section de niveau de session comprend un attribut de groupe SDP pour indiquer une relation spatiale, à l'intérieur d'un même repère spatial partagé, entre des données vidéo transportées par les au moins deux flux vidéo, dans lequel l'attribut de groupe SDP comprend des informations de regroupement de flux vidéo, dans lequel les informations de regroupement de flux vidéo comprennent un ensemble d'identifiants de flux vidéo de la pluralité de flux vidéo et une sémantique de groupe signalant que des données vidéo transportées par les flux vidéo identifiés ont une relation spatiale, l'ensemble d'identifiants comprenant au moins un identifiant de chacun des au moins deux flux vidéo, et dans lequel la description SDP comprend en outre, dans la section de niveau de média pour chacun des au moins deux flux vidéo, l'identifiant du flux vidéo et un attribut de relation spatiale SDP pour fournir des informations de localisation des données vidéo transportées par le flux vidéo correspondant à l'intérieur du même repère spatial partagé ;
déterminer une relation spatiale entre les au moins deux flux vidéo à partir de l'attribut de groupe SDP et en réponse à la détermination de la relation spatiale, transmettre une demande pour obtenir les au moins deux flux vidéo ; et
en réponse à la transmission de la demande, recevoir les au moins deux flux vidéo demandés.

6. Produit de programme informatique pour un appareil programmable, le produit de programme informatique comprenant des instructions pour effectuer chaque étape du procédé selon l'une quelconque des revendications 1 à 5 lorsque le programme est chargé et exécuté par un appareil programmable.

7. Dispositif de stockage d'informations non transitoire stockant des instructions d'un programme informatique pour mettre en œuvre le procédé selon l'une quelconque des revendications 1 à 5.

8. Dispositif pour transmettre au moins deux flux vidéo, chacun des au moins deux flux vidéo transportant des données vidéo encodées, les données vidéo encodées transportées respectivement par les au moins deux flux vidéo étant décodables indépendamment les unes des autres, le dispositif comprenant un microprocesseur configuré pour effectuer les étapes consistant à :
envoyer une description de protocole de description de session, SDP, de flux vidéo d'une pluralité de flux vidéo incluant les au moins deux flux vidéo ;
en réponse à l'envoi de la description SDP, recevoir une demande pour obtenir les au moins deux flux vidéo ;
transmettre les au moins deux flux vidéo selon la demande reçue,
dans lequel la description SDP comprend une section de niveau de session et une pluralité de sections de niveau de média pour chacun de la pluralité de flux vidéo, dans lequel la section de niveau de session comprend un attribut de groupe SDP pour indiquer une relation spatiale, à l'intérieur d'un même repère spatial partagé, entre des données vidéo transportées par les au moins deux flux vidéo ;
dans lequel l'attribut de groupe SDP comprend des informations de regroupement de flux vidéo ;
dans lequel les informations de regroupement de flux vidéo comprennent un ensemble d'identifiants de flux vidéo de la pluralité de flux vidéo et une sémantique de groupe signalant que des données vidéo transportées par les flux vidéo identifiés ont une relation spatiale, l'ensemble d'identifiants comprenant au moins un identifiant de chacun des au moins deux flux vidéo ; et
dans lequel la description SDP comprend en outre, dans la section de niveau de média pour chacun des au moins deux flux vidéo, l'identifiant du flux vidéo et un attribut de relation spatiale SDP pour fournir des informations de localisation des données vidéo transportées par le flux vidéo correspondant à l'intérieur du même repère spatial partagé.

9. Dispositif pour recevoir au moins deux flux vidéo, chacun des au moins deux flux vidéo transportant des données vidéo encodées, les données vidéo encodées transportées respectivement par les au moins deux flux vidéo étant décodables indépendamment les unes des autres, le dispositif comprenant un microprocesseur configuré pour effectuer les étapes consistant à :
recevoir une description de protocole de description de session, SDP, de flux vidéo d'une pluralité de flux vidéo incluant les au moins deux flux vidéo, dans lequel la description SDP comprend une section de niveau de session et une pluralité de sections de niveau de média pour chacun de la pluralité de flux vidéo, dans lequel la section de niveau de session comprend un attribut de groupe SDP pour indiquer une relation spatiale, à l'intérieur d'un même repère spatial partagé, entre des données vidéo transportées par les au moins deux flux vidéo, dans lequel l'attribut de groupe SDP comprend des informations de regroupement de flux vidéo, dans lequel les informations de regroupement de flux vidéo comprennent un ensemble d'identifiants de flux vidéo de la pluralité de flux vidéo et une sémantique de groupe signalant que des données vidéo transportées par les flux vidéo identifiés ont une relation spatiale, l'ensemble d'identifiants comprenant au moins un identifiant de chacun des au moins deux flux vidéo, et dans lequel la description SDP comprend en outre, dans la section de niveau de média pour chacun des au moins deux flux vidéo, l'identifiant du flux vidéo et un attribut de relation spatiale SDP pour fournir des informations de localisation des données vidéo transportées par le flux vidéo correspondant à l'intérieur du même repère spatial partagé ;
déterminer une relation spatiale entre les au moins deux flux vidéo à partir de l'attribut de groupe SDP et en réponse à la détermination de la relation spatiale, transmettre une demande pour obtenir les au moins deux flux vidéo ; et
en réponse à la transmission de la demande, recevoir les au moins deux flux vidéo demandés.
